# EUROPÄISCHE PATENTSCHRIFT

(11) **EP 1 869 973 B1**
(45) Veröffentlichungstag und Bekanntmachung des Hinweises auf die Patenterteilung: **18.11.2009**
(21) Anmeldenummer: 07007576.7
(22) Anmeldetag: 13.04.2007
(51) Int. Cl.: A01K 63/04

(54) **Aussenfilterpumpe**
Exterior filter pump
Pompe à filtre externe

(30) Priorität: 26.05.2006 DE 102006024732
(43) Veröffentlichungstag der Anmeldung: 26.12.2007
(73) Patentinhaber: JBL GmbH & Co. KG, 67141 Neuhofen (DE)
(72) Erfinder: Keppler, Rainer Dr., 68766 Hockenheim (DE)
(74) Vertreter: Kesselhut, Wolf

(56) Entgegenhaltungen:
- DE-A1- 4 410 561
- US-A- 5 294 335
- US-B2- 6 712 961

## Beschreibung

Die Erfindung betrifft eine Außenfilterpumpe, insbesondere für ein Aquarium, gemäß dem Oberbegriff von Anspruch 1.

Eine derartige Außenfilterpumpe ist aus der US 6 712 961 B2 bekannt. Diese bekannte Außenfilterpumpe weist einen Hebel auf, der schwenkbar an einer Schlauchverbindungseinheit zwischen den beiden Ventilen angebracht ist. Jedes Ventil besitzt einen drehbaren Stopfen, der fest mit dem Hebel verbunden ist. Folglich können durch Schwenken des Hebels beide Stopfen gemeinsam gedreht und somit beide Ventile gleichzeitig geöffnet und geschlossen werden. Der Hebel weist zudem zwei Rampen auf, die, wenn der Hebel aus einer senkrechten Stellung in eine waagerechte Stellung verschwenkt wird, zwei Finger, die integral an dem Deckel angeordnet sind, hintergreifen, so dass die Schlauchverbindungseinheit mit dem Deckel verriegelt ist. In der senkrechten Stellung des Hebels sind die Ventile geschlossen, in der waagerechten Stellung hingegen geöffnet. In der waagerechten Stellung des Hebels sind die Rampen außer Eingriff mit den Fingern, so dass die Schlauchverbindungseinheit entriegelt ist und vom Deckel abgenommen werden kann. Wenn der Hebel aus der waagerechten Stellung in die senkrechte Stellung geschwenkt wird, werden zuerst die Ventile vollständig geschlossen und erst danach die Rampen von den Fingern gelöst und die Schlauchverbindungseinheit entriegelt. Wenn umgekehrt der Hebel aus der senkrechten Stellung in die waagerechte Stellung verdreht wird, dann werden zuerst die Rampen hinter die Finger geführt und die Schlauchverbindungseinheit verriegelt und erst dann die Ventile vollständig geöffnet.

Der Hebel dient also sowohl zum gemeinsamen Öffnen und Schließen der Ventile als auch zum Verriegeln und Entriegeln der Schlauchverbindungseinheit, wodurch sich das Problem ergibt, dass sich die Ventile bei eingesetzter Schlauchverbindungseinheit nicht unabhängig voneinander verstellen lassen.

Demgemäß ist es eine Aufgabe der vorliegenden Erfindung, eine Außenfilterpumpe der eingangs genannten Art zu schaffen, bei der, wenn die Schlauchve rbindungseinheit am Deckel angebracht ist, eines der Ventile unabhängig von dem anderen Ventil verstellt werden kann.

Diese Aufgabe wird erfindungsgemäß durch die Merkmale von Anspruch 1 gelöst.

Gemäß der Erfindung weist eine Außenfilterpumpe für ein Aquarium einen Behälter für Filtermaterial auf, der an seiner Oberseite durch einen Deckel flüssigkeitsdicht abgedeckt wird, in welchem eine Schlauchverbindungseinheit abnehmbar angebracht ist. Die Schlauchverbindungseinheit besitzt einen Einlass für das zugeführte ungefilterte Wasser, dem ein Einlassventil zugeordnet ist, über welches sich die pro Zeiteinheit zugeführte Menge an Wasser verändern lässt. Die Schlauchverbindungseinheit besitzt weiterhin einen Auslass für das abgeführte gefilterte Wasser, welchem entsprechend ein Auslassventil zum öffnen und schließen des Auslasses zugeordnet ist. Die Erfindung zeichnet sich dadurch aus, dass am Deckel ein Einlasshebel zum Verstellen des Einlassventils und ein Auslasshebel zum Verstellen des Auslassventils verschwenkbar gelagert sind, denen jeweils ein korrespondierendes Kupplungselement zugeordnet ist. Das Kupplungselement wirkt dabei in der Weise zwischen dem Deckel und der Schlauchverbindungseinheit, dass die Schlauchverbindungseinheit nur in einer ersten Entnahmeposition, in der das zugeordnete Ventil geschlossen ist, vom Deckel abgenommen werden kann, wohingegen die Schlauchverbindungseinheit in einer zweiten Arbeitsposition, in der das Ventil geöffnet ist, am Deckel arretiert wird und nicht von diesem abnehmbar ist.

Die Kupplungselemente der Ventile können direkt an den jeweiligen Sperrorganen vorgesehen sein. Da jedem Ventil ein eigener Hebel zugeordnet ist, kann, wenn die Schlauchverbindungseinheit an dem Deckel angebracht ist, das eine Ventil unabhängig von dem anderen Ventil verstellt werden. Außerdem sind die Hebel am Deckel gelagert, so dass bei abgenommener Schlauchverbindungseinheit die jeweils korrespondierenden Kupplungselemente außer Eingriff stehen und ein versehentliches Öffnen eines Ventils - was zu unerwünschtem Auslaufen des in dem angeschlossenen Schlauch enthaltenen Wassers führt - vermieden wird.

Dies ist darauf zurückzuführen, dass das Verschwenken eines Hebels von den korrespondierenden Kupplungselementen - mangels Eingriff - nicht auf das Ventil übertragen wird, und ein Verstellen des Ventils direkt an dessen Kupplungselement ohne ein geeignetes Werkzeug von Hand nicht möglich ist.

Weitere Ausführungsformen der Erfindung sind in den abhängigen Ansprüchen beschrieben.

Es kann vorgesehen sein, dass die korrespondierenden Kupplungselemente eine Nut und einen Nocken umfassen, der relativ zur Nut verschoben, aber nicht gedreht werden kann. Da der Nocken somit drehfest in der Nut sitzt, bzw. in diese eingreift, sind der Hebel und das zugeordnete Ventil in der Weise gekoppelt, dass eine Schwenkbewegung des Hebels auf das Ventil übertragen wird.

In der Entnahmeposition verlaufen die Nuten hingegen in etwa parallel zu der Richtung, in die die Schlauchverbindungseinheit von dem Deckel abgenommen werden kann. Diese Richtung wird im Folgenden auch als Entnahmerichtung bezeichnet. In diesem Fall können die Schlauchverbindungseinheit und der Deckel erfindungsgemäß voneinander gelöst und wieder zusammengefügt werden, da sich die Nocken relativ zu den Nuten verschieben lassen.

Es kann weiterhin vorgesehen sein, dass die Nut an dem Hebel und der Nocken an dem zugeordneten Ventil oder dessen Sperrorgan vorgesehen ist, wobei jedoch die umgekehrte Anordnung ebenso möglich ist. Wenn die Nut am Hebel geformt ist, ergibt sich der Vorteil, dass sie in ihrer Entnahmeposition an ihrem einen Ende, das in Entnahmerichtung betrachtet vorne liegt, offen oder durchgängig ausgestaltet sein kann, wodurch der korrespondierende Nocken, der beim Lösen und Zusammenfügen von Schlauchverbindungseinheit und Deckel zusammen mit seinem Ventil und der Schlauchverbindungseinheit bewegt wird, leicht aus der Nut heraus geschoben und wieder in die Nut eingeführt werden kann. Die Nut verbleibt hingegen beim Lösen und Zusammenfügen von Schlauchverbindungseinheit und Deckel zusammen mit ihrem Hebel und dem Deckel in vorteilhafter Weise am Behälter.

Wenn die Nut am Ventil oder dessen Sperrorgan gebildet ist, ist das Ende der Nut, das in der Entnahmeposition an dem - in Entnahmerichtung betrachtet - hinteren Ende der Nut liegt, bevorzugt offen, derart, dass sich die Nut, die beim Lösen und Zusammenfügen von Schlauchverbindungseinheit und Deckel zusammen mit ihrem Ventil und der Schlauchverbindungseinheit bewegt wird, leicht von dem korrespondierenden Nocken herunter, und ebenso wieder auf diesen aufschieben lässt. Der Nocken verbleibt beim Lösen und Zusammenfügen von Schlauchverbindungseinheit und Deckel zusammen mit seinem Hebel und dem Deckel auf dem Behälter.

Bei der bevorzugten Ausführungsform der Erfindung sind die Ventile Kugelventile, die in vorteilhafter Weise aus wenigen Einzelteilen aufgebaut sind. Die Kugelventile lassen sich preisgünstig fertigen und bieten trotzdem eine einfache und sichere Bedienung sowie eine zuverlässige Abdichtung.

Nach einem weiteren der Erfindung zugrunde liegenden Gedanken kann es vorgesehen sein, dass eine Verriegelungsvorrichtung mit einem Verriegelungshebel vorgesehen ist, mittels welcher die Schlauchverbindungseinheit mit dem Deckel verriegelt und zum Abnehmen der Schlauchverbindungseinheit entriegelt werden kann.

Nach einer weiteren Ausführungsform der Erfindung ist der Deckel bevorzugt als Pumpenkopf ausgebildet der eine Pumpe mit einem Zulauf und einem Ablauf trägt, wobei der Zulauf in dem Fall, dass die Schlauchverbindungseinheit an dem Deckel angebracht ist, mit dem Einlass und der Ablauf mit dem Auslass verbunden ist.

Im Folgenden werden bevorzugte beispielhafte Ausführungsformen der Erfindung mit Bezug auf die Zeichnungen beschrieben. In den Zeichnungen zeigen:
- FIG. 1: eine schematische Seitenansicht einer Außenfilterpumpe mit einer an einem Deckel angebrachten Schlauchverbindungseinheit;
- FIG. 2: eine schematische Seitenansicht der Außenfilterpumpe der FIG. 1 mit von dem Deckel abgenommener Schlauchverbindungseinheit;
- FIG. 3: eine perspektivische Ansicht eines Deckels mit angebrachter Schlauchverbindungseinheit;
- FIG. 4: eine perspektivische Ansicht des Deckels der FIG. 1 mit abgenommener Schlauchverbindungseinheit;
- FIG. 5: eine schematische, längs einer senkrechten Ebene in der FIG. 3 geschnittene Vorderansicht der Schlauchverbindungseinheit;
- FIG. 6: eine längs der Linie VI-VI in der FIG. 5 geschnittene Detailansicht des Einlasshebels in Arbeitsposition; und
- FIG. 7: eine längs der Linie VII-VII in der FIG. 5 geschnittene Detailansicht des Auslasshebels in der Entnahmeposition.

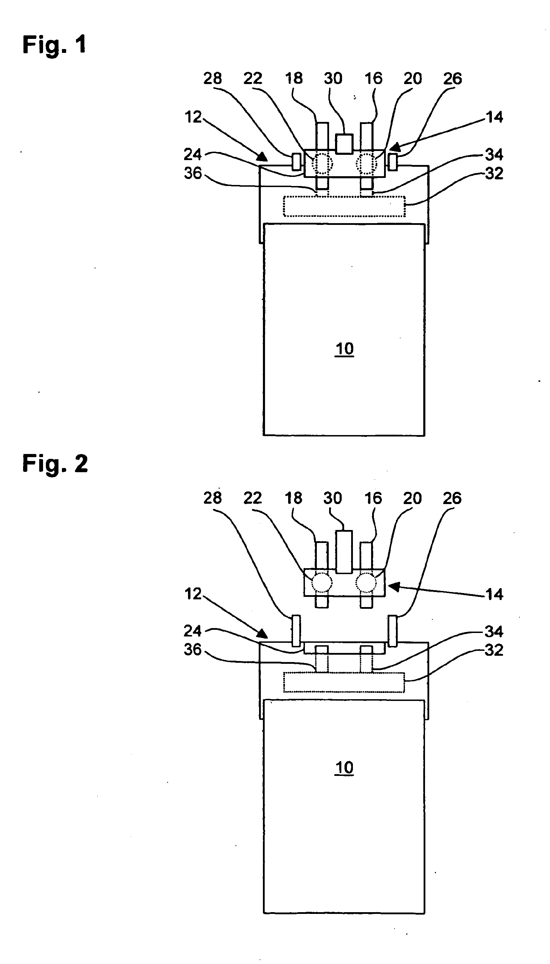

Die FIG. 1 und 2 zeigen schematisch eine erfindungsgemäße Außenfilterpumpe mit einem Behälter 10 für Filtermaterial, einem Deckel 12, der flüssigkeitsdicht auf dem Behälter 10 sitzt, und einer Schlauchverbindungseinheit 14, die abnehmbar insbesondere in einer an der Oberseite des Deckels 12 geformten Ausnehmung oder Vertiefung 24 aufgenommen ist.

Bei der Darstellung von FIG. 1 ist die Schlauchverbindungseinheit 14 am Deckel 12 angebracht und mit diesem verriegelt, wohingegen die Schlauchverbindungseinheit 14 und der Deckel 12 in FIG. 2 voneinander gelöst sind, indem die Schlauchverbindungseinheit 14 in Entnahmerichtung (in den FIG. 1 und 2 nach oben) vom Deckel 12 abgenommen wurde.

Die Schlauchverbindungseinheit 14 weist einen Einlass 16 für das ungefilterte Wasser, einen Auslass 18 für das gefilterte Wasser, ein Einlassventil 20, mit dem der Einlass 16 geschlossen und geöffnet werden kann, und ein Auslassventil 22 auf, mit welchem der Auslass 18 geschlossen und geöffnet werden kann.

Auf den Einlass 16 und den Auslass 18 können Schläuche (nicht dargestellt) aufgesteckt werden, die beispielsweise zu einem Aquarium führen.

Der Deckel 12 weist in seiner Oberseite die Vertiefung 24 (FIG. 2) auf, die zur Aufnahme der Schlauchverbindungseinheit 14 dient. Am Deckel 12 ist in der rechten Seitenwand der Vertiefung 24 ein Einlasshebel 26 gelagert, mit dem das Einlassventil 20 verstellt werden kann, um die Menge an zugeführtem Wasser zu verändern. In der linken Seitenwand der Vertiefung 24 ist in entsprechender Weise weiterhin ein Auslasshebel 28 gelagert, mit dem das Auslassventil 22 verstellt werden kann, um die Menge an austretendem Wasser zu verändern.

An jedem Ventil 20, 22 und dem zugeordneten Hebel 26, 28 sind in den FIG. 1 und 2 nicht dargestellte korrespondierende Kupplungselemente vorgesehen, die eine Entnahmeposition, in der das zugeordnete Ventil 20, 22 geschlossen ist und die Schlauchverbindungseinheit 14 von dem Deckel 12 abgenommen werden kann (FIG. 2), sowie eine Arbeitsposition einnehmen können, in der das zugeordnete Ventil 20, 22 offen ist und die Schlauchverbindungseinheit 14 nicht von dem Deckel 12 abgenommen werden kann (FIG. 1). Wenn die korrespondierenden Kupplungselemente in Eingriff stehen, wird eine Bewegung des jeweiligen Hebels 26, 28 auf das zugeordnete Ventil 20, 22 übertragen, so dass dieses mit Hilfe des zugeordneten Hebels 26, 28 entsprechend verstellt werden kann.

Wie der Darstellung von FIG. 1 zu entnehmen ist, sind die Ventile 20, 22 in der dort gezeigten Position vollständig geöffnet und die Hebel 26, 28 in eine waagerechte Stellung nach hinten (oder in die Bildebene hinein) verschwenkt, in der sich die korrespondierenden Kupplungselemente in der Arbeitsposition befinden.

Demgegenüber sind die Ventile 20, 22 in der in FIG. 2 gezeigten Stellung vollständig geschlossen und die Hebel 26, 28 in eine senkrechte Stellung nach oben verschwenkt, in der sich die korrespondierenden Kupplungselemente in der Entnahmeposition befinden.

Wie der Darstellung von FIG. 1 und 2 weiterhin entnommen werden kann, umfasst die Außenfilterpumpe bevorzugt zusätzlich eine Verriegelungsvorrichtung mit einem Verriegelungshebel 30, mit der die an dem Deckel 12 angebrachte Schlauchverbindungseinheit 14 verriegelt (FIG. 1) und zum Abnehmen der Schlauchverbindungseinheit 14 entriegelt (FIG. 2) werden kann.

In diesem Zusammenhang ist der Darstellung von FIG. 1 zu entnehmen, dass der Verriegelungshebel 30 in der Verriegelungsstellung in eine waagerechte Stellung nach hinten (oder in die Bildebene hinein) verschwenkt ist, wohingegen der Verriegelungshebel 30 gemäß der Darstellung von FIG. 2 zur Entriegelung der Schlauchverbindungseinheit 14 in eine senkrechte Stellung nach oben verschwenkt ist, in der die Verriegelungsvorrichtung zur Entnahme freigegeben ist.

Bei der Außenfilterpumpe der FIG. 1 und 2 ist der Deckel 12 als Pumpenkopf ausgebildet. Der Deckel 12 trägt eine Pumpe 32 mit einem Zulauf 34 und einem Ablauf 36, wobei, wenn die Schlauchverbindungseinheit 14 am Deckel 12 angebracht ist, der Zulauf 34 mit dem Einlass 16 und der Ablauf 36 mit dem Auslass 18 verbunden sind, wie dies in FIG. 1 angedeutet ist.

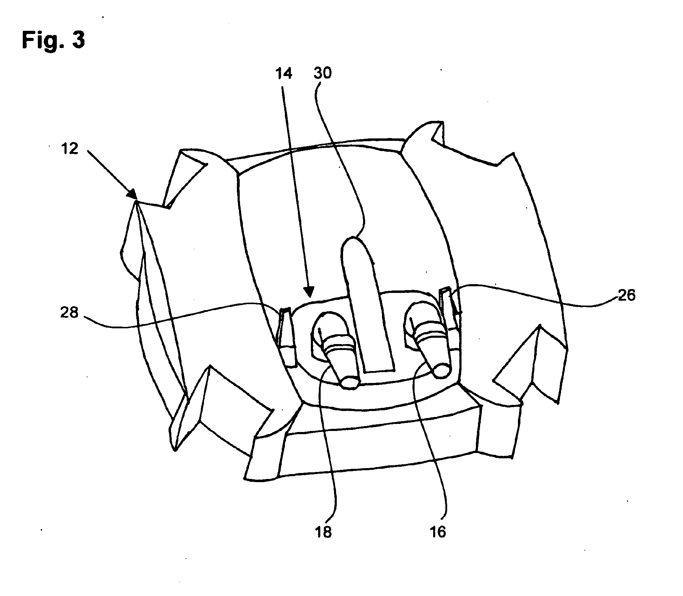

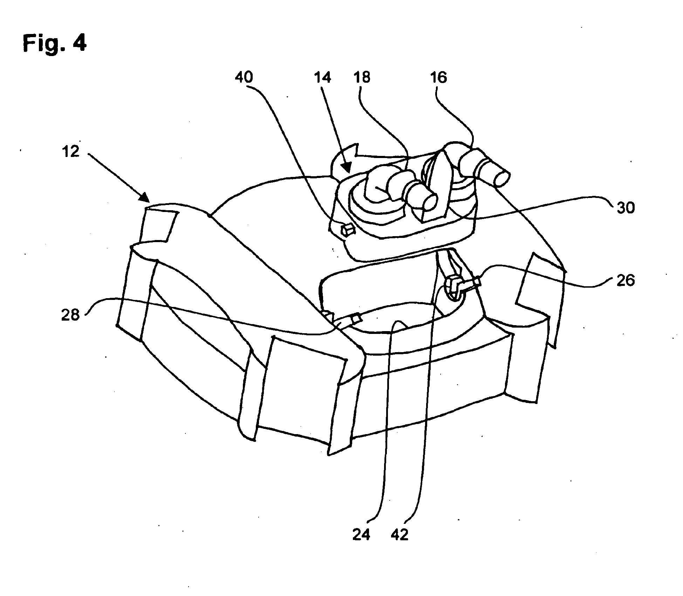

Die FIG. 3 und 4 zeigen in schematischer Weise einen Deckel 12 (der im Wesentlichen dem Deckel 12 der FIG. 1 und 2 gleicht), und zwar einmal mit eingesetzter und einmal mit abgenommener Schlauchverbindungseinheit 14, die im Wesentlichen der Schlauchverbindungseinheit 14 der FIG. 1 und 2 gleicht.

Die Darstellung von FIG. 3 zeigt dabei eine Stellung, in der der Einlasshebel 26, der Auslasshebel 28 und der Verriegelungshebel 30 vollständig nach hinten bis zur Oberseite des Deckels 12 hin verschwenkt sind. In dieser Stellung sind die Ventile 20, 22 dementsprechend vollständig geöffnet, die korrespondierenden Kupplungselemente befinden sich in der Arbeitsposition, und die Verriegelungsvorrichtung ist am Gehäuse verriegelt.

In der FIG. 4 ist eine Stellung gezeigt, in der der Einlasshebel 26, der Auslasshebel 28 und der Verriegelungshebel 30 ganz nach vorne bis zu einem entsprechenden Anschlag in der Oberseite des Deckels 12 verschwenkt sind, in der sich die korrespondierenden Kupplungselemente in der Entnahmeposition befinden, die Ventile 20, 22 vollständig geschlossen sind, und die Verriegelungsvorrichtung gegenüber dem Gehäuse entriegelt ist.

Anhand der Darstellung von FIG. 4 ist hierbei zu erkennen, dass die korrespondierenden Kupplungselemente bei der in FIG. 3 und 4 gezeigten Ausführungsform von Deckel 12 und Schlauchverbindungseinheit 14 auf der Einlassseite und der Auslassseite jeweils eine Nut und einen Nocken umfassen. Genauer gesagt ist an dem Einlassventil 20 ein erster Nocken 38 (nicht dargestellt, da durch Schlauchverbindungseinheit 14 verdeckt), an dem Auslassventil 22 ein zweiter Nocken 40, an dem Einlasshebel 26 eine erste Nut 42, und an dem Auslasshebel 28 eine zweite Nut 44 (nicht dargestellt, da durch Deckel 12 verdeckt) geformt. Die Nocken 38, 40 haben hierbei bevorzugt einen quadratischen Querschnitt, dessen Kantenlänge im Wesentlichen der Innenbreite der Nuten 42, 44 entspricht, so dass jeder Nocken 38, 40 in seiner korrespondierenden Nut 42, 44 zwar verschoben, jedoch in der Nut nicht frei gedreht werden kann.

Es sind jedoch auch andere Querschnittsformen denkbar, sofern diese eine Verschiebung zwischen den Nocken 38, 40 und der zugeordneten Nut 42, 44 ermöglichen, jedoch ein freies Verdrehen verhindern, um so eine Schwenkbewegung des Hebels 26, 28 auf das Ventil 20, 22 zu übertragen.

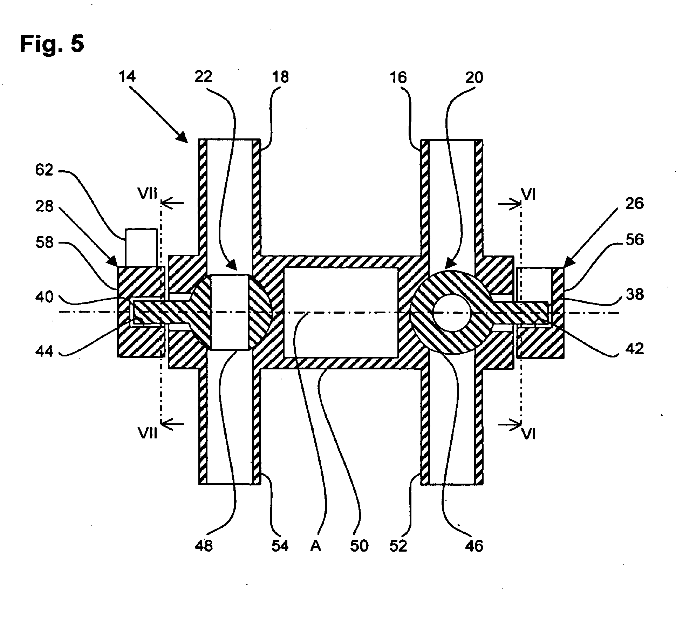

Die FIG. 5 zeigt schematisch die Schlauchverbindungseinheit 14 und die Hebel 26, 28 der FIG. 3 in einer senkrechten Schnittansicht entlang der Schwenkachse A der beiden Hebel 26, 28. Da die Schlauchverbindungseinheit 14 am Deckel 12 (nicht dargestellt) angebracht ist, können auch die beiden Ventile 20, 22, genauer gesagt deren Sperrorgane 46, 48, um diese Schwenkachse A geschwenkt werden. Die Ventile 20, 22 sind dabei als Kugelventile mit kugelförmigen Sperrorganen 46, 48 ausgebildet. Die Schlauchverbindungseinheit 14 weist ein Gehäuse 50 auf, in dem die Ventile 20, 22 gelagert sind und das an seiner Oberseite den Einlass 16 und Auslass 18 aufweist, und an dessen Unterseite ein erster und ein zweiter Verbindungsstutzen 52 und 54 angeordnet sind.

Wenn die Schlauchverbindungseinheit 14 am Deckel 12 angebracht ist, wird der erste Verbindungsstutzen 52 mit dem Zulauf 34 der Pumpe 32 und der zweite Verbindungsstutzen 54 mit dem Ablauf 36 der Pumpe 32 verbunden. Auf der Einlassseite verbindet das Einlassventil 20 den Einlass 16 mit dem ersten Verbindungsstutzen 52, und auf der Auslassseite verbindet das Auslassventil 22 den Auslass 18 mit dem zweiten Verbindungsstutzen 54.

Gemäß der Darstellung von FIG. 5 ist gut zu erkennen, dass jedes Sperrorgan 46, 48 einen der Nocken 38, 40 trägt, die jeweils durch eine Öffnung im Gehäuse 50 waagerecht nach außen ragen und auf der Schwenkachse A liegen. Hierbei ist das jeweils außen liegende freie Ende der Nocken, 3 8, 40 in den jeweils korrespondierenden Nuten 42, 44 an den zugeordneten Hebeln 26, 28 aufgenommen.

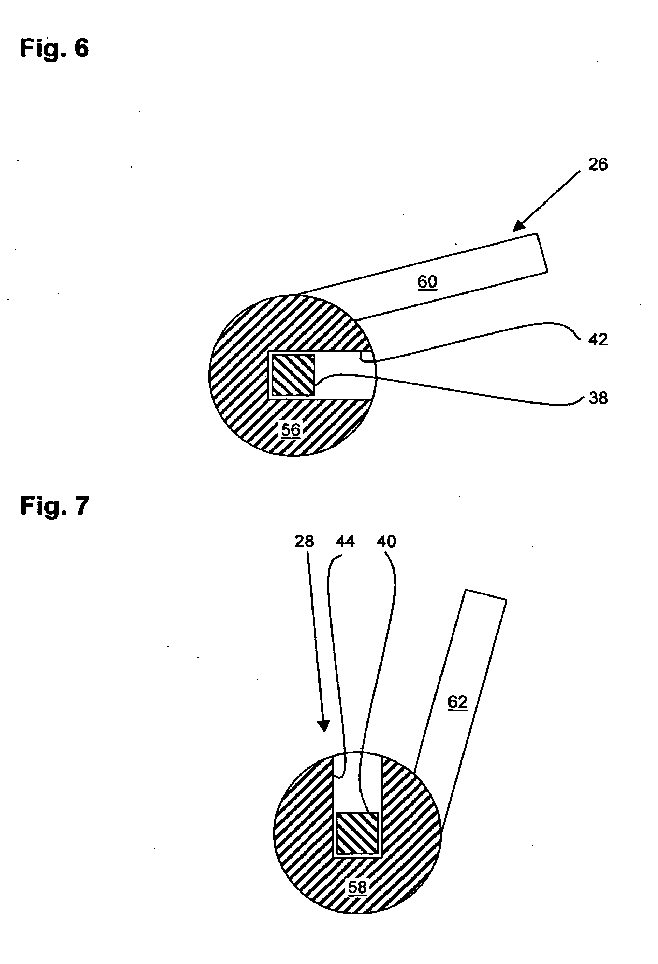

Die FIG. 6 und 7 sind vergrößerte Schnittansichten der FIG. 5 und zeigen den Einlasshebel 26 mit dem in seiner Nut 42 aufgenommenen ersten Nocken 38, bzw. den Auslasshebel 28 mit dem in seiner Nut 44 aufgenommenen zweiten Nocken 40.

In den FIG. 5, 6 und 7 ist gezeigt, dass jeder Hebel 26, 28 eine kreisrunde Scheibe 56, 58 und einen von dessen Umfangsfläche abstehenden Stab 60, 62 aufweist. Die Scheiben 56, 58 sind schwenkbar in der rechten bzw. linken Seitenwand der Vertiefung 24 (vgl. FIG. 2 und 4) gelagert. Jede Nut 42, 44 ist an demjenigen Ende (rechts in der FIG. 6, bzw. oben in der FIG. 7) offen, das in Entnahmerichtung (in den FIG. 5, 6 und 7 aufwärts) vorne liegt, wenn die Nut ihre Entnahmeposition eingenommen hat.

Die erste Nut 42 ist in den FIG. 5 und 6 in der Arbeitsposition gezeigt und muss um 90° im Gegenuhrzeigersinn (FIG. 6) verschwenkt werden, um ihre Entnahmeposition einzunehmen, in der ihr offenes Ende ebenfalls oben liegt. In der gezeigten Arbeitsposition ist die Entnahme der Schlauchverbindungseinheit 14 von dem Deckel 12 in Entnahmerichtung, (in Fig. 6 nach oben hin) aus der Vertiefung 24 heraus blockiert, da der erste Nocken 38 in der ersten Nut 42, die bevorzugt waagerecht verläuft, nicht nach oben bewegt werden kann. Die zweite Nut 44 ist in den FIG. 5 und 7 bereits in der Entnahmeposition gezeigt, in der ihr offenes Ende in der dort gezeigte Darstellung nach oben weist und eine Entnahme des Nockens - und damit der Schlauchverbindungseinheit - ermöglicht.

### BEZUGSZEICHENLISTE

- 10: Behälter
- 12: Deckel
- 14: Schlauchverbindungseinheit
- 16: Einlass
- 18: Auslass
- 20: Einlassventil
- 22: Auslassventil
- 24: Vertiefung
- 26: Einlasshebel
- 28: Auslasshebel
- 30: Verriegelungshebel
- 32: Pumpe
- 34: Zulauf
- 36: Ablauf
- 38: Nocken am Einlassventil 20
- 40: Nocken am Auslassventil 22
- 42: Nut am Einlasshebel 26
- 44: Nut am Auslasshebel 28
- 46: Sperrorgan des Einlassventils 20
- 48: Sperrorgan des Auslassventils 22
- 50: Gehäuse
- 52: Verbindungsstutzen zum Zulauf 34
- 54: Verbindungsstutzen zum Ablauf 36
- 56: Scheibe des Einlasshebels 26
- 58: Scheibe des Einlasshebels 28
- 60: Stab des Einlasshebels 26
- 62: Stab des Einlasshebels 28

## Patentansprüche

1. Außenfilterpumpe, insbesondere für ein Aquarium, mit einem Behälter (10) für Filtermaterial, einem Deckel (12), der auf dem Behälter (10) sitzt, einer Schlauchverbindungseinheit (14), die abnehmbar an dem Deckel (12) angebracht ist, wobei die Schlauchverbindungseinheit einen Einlass (16) für das ungefilterte Wasser, einen Auslass (18) für das gefilterte Wasser, ein Einlassventil (20) zum öffnen und schließen des Einlasses (16), sowie ein Auslassventil (22) zum öffnen und schließen des Auslasses (18) aufweist,
**dadurch gekennzeichnet, dass**
am Deckel (12) ein Einlasshebel (26) zum Verstellen des Einlassventils (20) und ein Auslasshebel (28) zum Verstellen des Auslassventils (22) gelagert sind,
und dass an jedem Ventil (20, 22) und dem zugeordneten Hebel (26, 28) korrespondierende Kupplungselemente (38, 40, 42, 44) vorgesehen sind, die eine Entnahmeposition, in der das zugeordnete Ventil (20, 22) geschlossen ist und die Schlauchverbindungseinheit (14) vom Deckel (12) abgenommen werden kann, sowie eine Arbeitsposition einnehmen können, in der das zugeordnete Ventil (20, 22) geöffnet ist und die Schlauchverbindungseinheit (14) am Deckel (12) arretiert wird.

2. Außenfilterpumpe nach Anspruch 1,
**dadurch gekennzeichnet, dass**
die korrespondierenden Kupplungselemente eine Nut (42, 44) und einen Nocken (38, 40) umfassen, der relativ zur Nut (42, 44) verschoben, aber nicht gedreht werden kann.

3. Außenfilterpumpe nach Anspruch 2,
**dadurch gekennzeichnet, dass**
die Nut (42, 44) an dem Hebel (26, 28) und der Nocken (38, 40) an dem zugeordneten Ventil (20, 22) vorgesehen ist, und dass die Nut (42, 44) in ihrer Entnahmeposition an ihrem in Entnahmerichtung vorne liegenden Ende offen ist.

4. Außenfilterpumpe nach Anspruch 2,
**dadurch gekennzeichnet, dass**
die Nut (42, 44) an dem Ventil (20, 22) und der Nocken (38, 40) an dem zugeordneten Hebel (26, 28) vorgesehen ist, und dass die Nut (42, 44) in ihrer Entnahmeposition an ihrem Ende, das in Entnahmerichtung hinten liegt, offen ist.

5. Außenfilterpumpe nach einem der vorhergehenden Ansprüche,
**dadurch gekennzeichnet, dass**
die Ventile (20, 22) Kugelventile sind.

6. Außenfilterpumpe nach einem der vorhergehenden Ansprüche,
**dadurch gekennzeichnet, dass**
eine Verriegelungsvornchtung mit einem Verriegelungshebel (30) vorgesehen ist, mit der die Schlauchverbindungseinheit (14) mit dem Deckel (12) verriegelt und zum Abnehmen der Schlauchverbindungseinheit (14) entriegelt werden kann.

7. Außenfilterpumpe nach einem der vorhergehenden Ansprüche,
**dadurch gekennzeichnet, dass**
der Deckel (14) als Pumpenkopf ausgebildet ist und eine Pumpe (32) mit einem Zulauf (34) und einem Ablauf (36) trägt, und dass, wenn die Schlauchverbindungseinheit (14) an dem Deckel (12) angebracht ist, der Zulauf (34) mit dem Einlass (16) und der Ablauf (35) mit dem Auslass (18) verbunden ist.

## Claims

1. External filter pump, in particular for an aquarium, with a container (10) for filter material, a cover (12) which rests on container (10), a hose connecting unit (14) which can be placed on and removed from cover (12), whereby the hose connecting unit has an inlet (16) for the unfiltered water, an outlet (18) for the filtered water, an inlet valve (20) to open and close the inlet (16) and an outlet valve (22) to open and close the outlet (18),
**characterised in that,**
an inlet lever (26) to regulate the inlet valve (20) and an outlet lever (28) to regulate the outlet valve (22) are fitted to cover (12) and that corresponding coupling elements (38, 40, 42, 44) are provided on each valve (20, 22) and the associated lever (26, 28), whereby said coupling elements can assume a removal position in which the appropriate valve (20, 22) is closed and the hose connecting unit (14) can be removed from cover (12), as well as an operating position in which the appropriate valve (20, 22) is open and the hose connecting unit (14) is locked to cover (12).

2. External filter pump in accordance with claim 1,
**characterised in that,**
the corresponding coupling elements comprise a slot (42, 44) and a lug (38, 40) which can be displaced relative to slot (42, 44) but not rotated.

3. External filter pump in accordance with claim 2,
**characterised in that,**
the slot (42, 44) is provided on the lever (26, 28) and the lug (38, 40) is provided on the relevant valve (20, 22), and that the slot (42, 44) in its removal position is open at its most forward end in the removal direction.

4. External filter pump in accordance with claim 2,
**characterised in that,**
the slot (42, 44) is provided on the valve (20, 22) and the lug (38, 40) is provided on the appropriate lever (26, 28) and that the slot (42, 44) in its removal position is open its rearmost end in the removal direction.

5. External filter pump in accordance with one of the preceding claims,
**characterised in that,**
the valves (20, 22) are ball sector valves.

6. External filter pump in accordance with one of the preceding claims,
**characterised in that,**
a locking device is provided with a locking lever (30) with which the hose connecting unit (14) can be locked with the cover (12) and can be unlocked to remove the hose connecting unit (14).

7. External filter pump in accordance with one of the preceding claims,
**characterised in that,**
the cover (14) is formed as a pump head and supports a pump (32) with a feed (34) and an outlet (36), and that, when the hose connecting unit (14) is placed on the cover (12), the feed (34) is connected to the inlet (16) and the outlet (35) is connected to the outlet (18).

## Revendications

1. Pompe à filtre externe, en particulier pour un aquarium, comportant un récipient (10) pour matériel filtrant, un couvercle (12) posé sur le récipient (10), une unité de liaison par tuyaux flexibles (14) montée de manière amovible sur le couvercle (12), l'unité de liaison par tuyaux flexibles présentant une admission (16) pour l'eau non filtrée, une sortie (18) pour l'eau filtrée, une soupape d'admission (20) pour ouvrir et fermer l'admission (16) ainsi qu'une soupape de sortie (22) pour ouvrir et fermer la sortie (18), **caractérisée en ce que** sont logés, sur le couvercle (12), un levier d'admission (26) pour régler la soupape d'admission (20) et un levier de sortie (28) pour régler la soupape de sortie (22) et **en ce que** sont prévus, sur chaque soupape (20, 22) et le levier associé (26, 28), des éléments de couplage correspondants (38, 40, 42, 44) qui peuvent prendre une position de prélèvement, dans laquelle la soupape associée (20, 22) est fermée et l'unité de liaison par tuyaux flexibles (14) peut être retirée du couvercle (12), ainsi qu'une position de travail dans laquelle la soupape associée (20, 22) est ouverte et l'unité de liaison par tuyaux flexibles (14) est bloquée sur le couvercle (12).

2. Pompe à filtre externe selon la revendication 1, **caractérisée en ce que** les éléments de couplage correspondants comprennent une rainure (42, 44) et un ergot (38, 40) qui peut être déplacé relativement à la rainure (42, 44), mais ne peut pas subir de rotation.

3. Pompe à filtre externe selon la revendication 2, **caractérisée en ce que** la rainure (42, 44) est prévue sur le levier (26, 28) et l'ergot (38, 40), sur la soupape associée (20, 22) et **en ce que** la rainure (42, 44), dans sa position de prélèvement, est ouverte en son extrémité avant dans le sens du prélèvement.

4. Pompe à filtre externe selon la revendication 2, **caractérisée en ce que** la rainure (42, 44) est prévue sur la soupape (20, 22) et l'ergot (38, 40), sur le levier associé (26, 28) et **en ce que** la rainure (42, 44), dans sa position de prélèvement, est ouverte en son extrémité arrière dans le sens du prélèvement.

5. Pompe à filtre externe selon l'une des revendications précédentes, **caractérisée en ce que** les soupapes (20, 22) sont des soupapes à bille.

6. Pompe à filtre externe selon l'une des revendications précédentes, **caractérisée en ce qu'**est prévu un dispositif de verrouillage avec un levier de verrouillage (30), lequel dispositif verrouille l'unité de liaison par tuyaux flexibles (14) au couvercle (12) et peut être déverrouillé pour retirer l'unité de liaison par tuyaux flexibles (14).

7. Pompe à filtre externe selon l'une des revendications précédentes, **caractérisée en ce que** le couvercle (14) se présente sous la forme d'une tête de pompe et porte une pompe (32) avec une alimentation (34) et une évacuation (36) et **en ce que**, lorsque l'unité de liaison par tuyaux flexibles (14) est montée sur le couvercle (12), l'alimentation (34) est reliée à l'admission (16) et l'évacuation (35) est reliée à la sortie (18).
